# EUROPEAN PATENT APPLICATION

(11) **EP 1 760 231 A2**
(43) Date of publication of application: **07.03.2007**
(21) Application number: 06015528.0
(22) Date of filing: 26.07.2006
(51) Int. Cl.: E05B 65/20, E05B 17/10

(54) **Inner door handle**

(30) Priority: 31.08.2005 DE 102005041198
(71) Applicant: ITW Automotive Products GmbH & Co. KG, 58636 Iserlohn (DE)
(72) Inventor: Mines, Andrew, Malden, Essex (GB); Weiner, Heiko, 97990 Weikersheim (DE); Stapf, Uwe, 97285 Röttingen (DE)
(74) Representative: Hauck, Graalfs, Wehnert, Döring, Siemons

(57) **Abstract**

A door handle for the inner side of a door of an automobile adapted to actuate locking means for the door, wherein a light source is provided to illuminate the door handle, characterized in that at least a portion of door handle is formed of a transparent material and coated with a thin colour generating layer which is translucent to a small extent and the light source being located in the area of the transparent portion.

## Description

The invention relates to a door handle to actuate a locking means of a door of an automobile from the inner side according to the patent claim 1.

Such a door handle is usually formed as a lever which is disposed opposite of a handle recess in the interior lining. The user moves his hand into the handle recess and grasps the door lever from the inside and pulls it towards himself in order to unlock the locking means of the door.

In the dark it is difficult to find the position of the door handle, especially because these are provided in different locations in the most different types of vehicles. Therefore, the user does not know where to place its hand in order to actuate the door handle, if the door handle is not recognizable in the darkness.

Different suggestions have been made to provide a light source in or at the door handle to illuminate the door handle in the darkness. To this end, it is also known to use a strip of an electro-luminescent material.

The invention is based on the problem to provide a door handle to actuate a locking means of a door of an automobile from the inner side which can be illuminated in a simple manner.

This problem is solved by the features of patent claim 1.

In the inventive door handle, at least a portion of the handle is formed of a transparent material. Usually, such door handles are formed of plastics and are coated with a material with metallic appearance by varnishing or coating in order to provide the door handle with a metallic finish. In the inventive door handle, either the entire handle body or a portion thereof consists of a suitable plastic material which is transparent for light. According to the invention it is provided that at least the portion of the transparent material is coated with a thin, colour generating layer which is translucent to a small extent. In the area of the transparent material, a light source is integrated into the door handle.

The thin layer being translucent to a small extent is furnished such that upon sufficient outside brightness, the light shining through from the inner side is not perceived. The ambient light is reflected at the surface of the door handle as is the case in known coatings as well. Especially, the thin layer is such that upon illumination from the environment it has a metallic or chromium-like appearance. In the dawn or darkness the reflection diminishes or expires completely. Instead, the light is shining through the translucent layer to the outer side and thereby makes the door handle visible and recognizable also in the dark.

The effect of the inventive door handle is independent of the fact if the transparent portion of the door handle faces the interior of the automobile or if it faces the handle recess in the interior lining. In the latter case the light coming from the inside to the outer side leads to an indirect illumination. In the first case, the door handle itself shines in a manner visible for the user. It is understood that the illumination is so decent as not to be disturbing.

According to an aspect of the invention, the light source is an LED, a bulb, or an electro-luminescence sheet. In the alternative, a light conduit can be provided, extending into the door handle, wherein the light source may then be provided outside of the door handle or at a location from which the light of the light source cannot reach the translucent coating directly through the transparent material of the door handle.

The light source may be switched on automatically upon starting the functions of the automobile. However, it is also conceivable to couple the switching on of the light source with the switching on of the headlights of the automobile. Finally, it is also conceivable to provide an electronic circuit to operate the light source which is adapted to keep the light source switched on following the turning off of the functions of the automobile for a predetermined duration and to switch off the light source then automatically.

In the following, the invention shall be explained in greater detail by means of two embodiments shown in drawings.
- Figure 1: shows a side view of a door handle in a first embodiment according to the invention.
- Figure 2: shows a second embodiment of a door handle according to the invention in a side view.

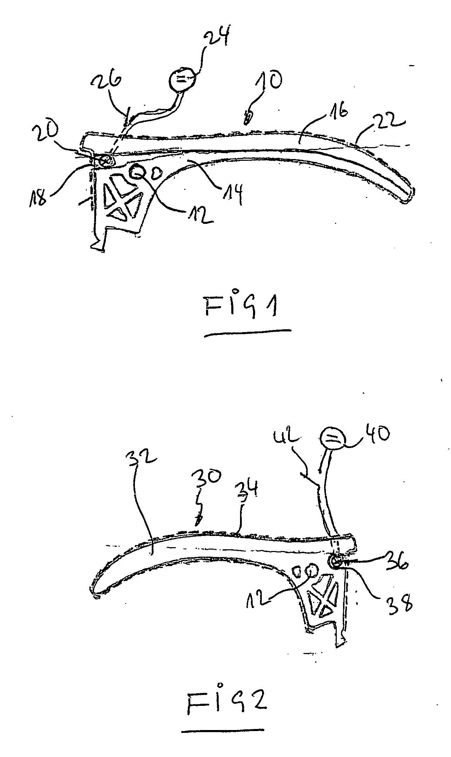

In Figure 1, a lever 10 can be seen which serves as a door handle for the actuation of a locking means of a door of an automobile from the inner side. It may be seated pivotally in the interior lining of the door of the automobile by means of a bearing recess 12. The door of the automobile as well as the bearing are not shown. The lever 10 is mounted as a unit from a first portion 14 and a second portion 16, which are connected to each other in a two component injection molding method. The portion 14 facing the interior lining can for instance consist of an opaque, relatively rigid material. The portion 16 directed to the interior of the automobile, is made of a transparent material. In a recess 18 close to the bearing recess 12, a light source 20 is integrated into the portion 14, namely such that its light shines into the direction of the portion 16. It is understood that means may be provided by which the light shines in the first place to the portion 16, for example by providing respective reflection layers at the light source 10. Moreover, it is understood that the light source 20 may be provided further in the direction of the center of the lever 10.

The portion 16 at its outside is coated with a very thin layer 26 from a colour generating material which is translucent to a small extent. The coating can be performed by means of varnishing or vaporization, wherein the coating is such that it has a metallic or chromium-like appearance upon illumination from the outer side. In the dawn or in darkness, the light of the light source 20 is becoming visible in a recognizable extent through the coating 22, so that the lever 10 or the portion 16, respectively is perceived as a shining body.

The light source 20 if fed by a suitable current source 24, wherein the electrical connection comprises a switch 26. The switch is operated by an electronic circuit which controls when to switch on or switch off the light source. In this way for example a coupling to the switching on of the head lights may be provided.

In the embodiment of figure 2, a handle lever 30 which looks similar to the lever 10 is formed of a transparent material in one part. The lever body is coated entirely with a colour generating, thin layer 34 which is translucent to a small extent, and which may be similar to the layer 22 of figure 1. A light source 36 is disposed on a recess 38 and connected to a current source 40. A switch 42 can disconnect the connection. By means of the light source 36, the entire handle body 32 can be illuminated. The illumination and the characteristics of the layer 34 are such that the light shining through the layer 34 is perceived only in the dawn or in darkness. When there is sufficient ambient light, the layer 34 is reflective and gives the lever 30 a chromium-like or metallic appearance.

It is understood that the positioning of the light sources 20 or 36, respectively, according to figures 1 and 2 is arbitrary and the light source itself can be formed by different known light sources, for example an LED, a bulb, an electro-luminescence sheet or the like. Furthermore, also a light conduit can be led into the lever body, wherein the light source is provided outside of the lever body or such that the light of the light source does not reach the outside directly via the coating 22 or 34, respectively, but is generated at the location at which the light conduit ends.

## Claims

1. A door handle for the inner side of a door of an automobile adapted to actuate locking means for the door, wherein a light source is provided to illuminate the door handle, **characterized in that** at least a portion of door handle (10, 30) is formed of a transparent material and coated with a thin colour generating layer (22, 34) which is translucent to a small extent and the light source (20, 36) being located in the area of the transparent portion (16, 32).

2. A door handle of claim 1, wherein the thin layer (22, 34) is such that upon illumination from the environment it has a metallic or chromium like appearance.

3. The door handle of claim 1 or 2, wherein the light source is a LED, an electroluminescence sheet or a bulb.

4. The door handle of claim 1 or 2, wherein a light conduit is integrated which cooperates with a light source in the door handle or outside the door handle.
